# EUROPEAN PATENT SPECIFICATION

(11) **EP 4 560 479 B1**
(45) Date of publication and mention of the grant of the patent: **08.07.2026**
(21) Application number: 23893350.1
(22) Date of filing: 06.09.2023
(51) Int. Cl.: G06F 12/02, G06F 3/06

(54) **FRAGMENT FILE SORTING METHOD, MANAGEMENT DEVICE, FLASH MEMORY DEVICE, AND TERMINAL**
FRAGMENTDATEISORTIERVERFAHREN, VERWALTUNGSVORRICHTUNG, FLASH-SPEICHERVORRICHTUNG UND ENDGERÄT
PROCÉDÉ DE TRI DE FICHIER DE FRAGMENT, DISPOSITIF DE GESTION, DISPOSITIF DE MÉMOIRE FLASH ET TERMINAL

(30) Priority: 22.11.2022 CN 202211469161
(43) Date of publication of application: 28.05.2025
(73) Proprietor: Honor Device Co., Ltd., Shenzhen, Guangdong 518040 (CN)
(72) Inventor: CHEN, Rui, Shenzhen, Guangdong 518040 (CN)
(74) Representative: Thun, Clemens
(86) International application number: PCT/CN2023/117254
(87) International publication number: WO 2024/109257

(56) References cited:
- CN-A- 112 363 828
- CN-A- 112 445 766
- US-A1- 2005 216 665
- US-A1- 2014 223 083
- US-A1- 2015 220 551

## Description

### TECHNICAL FIELD

This application relates to the field of terminal technologies, and in particular, to a method for reorganizing fragmented files, a management device, a flash memory device, and a terminal.

### BACKGROUND

Terminals (such as mobile phones) using Android (Android) systems gradually become a mainstream in the terminal market. The current Android system usually uses an embedded multi media card (embedded multi media card, eMMC) or universal flash storage (universal flash storage, UFS) as a flash memory device.

The eMMC and UFS are different types of flash memory (flash memory) devices. The flash memory device includes one or more storage blocks for storing data in a flash memory manner. A characteristic of the flash memory device is that original data needs to be erased before new data is written in. In long-time use of the terminal, fragmentation of the flash memory device becomes more severe due to operations such as repeated reading, writing, and erasing. A large amount of fragmented data is stored in the flash memory device, occupying the limited storage space in the flash memory device, causing insufficiency of the storage space in the flash memory device. When the storage space of the flash memory device is insufficient, the terminal needs to perform a garbage collection (garbage collection, GC) operation on the flash memory device to reclaim the storage space. A purpose of the GC operation is to reclaim an invalid physical page in the storage block and reuse the invalidated physical page to store data.

In conventional technologies, the GC operation performed by the terminal on the flash memory device depends on a firmware (firmware) algorithm inside the flash memory device. However, because a restricted condition is set in the firmware algorithm, fragment reorganization cannot be performed until the flash memory device satisfies the restricted condition. Therefore, the GC operation cannot be performed on the flash memory device in a timely manner based on the firmware algorithm. As a result, performance of the flash memory device cannot be restored in a timely manner. US 2015220551 A1 deals with file defragmentation in flash memory device.

### SUMMARY

The invention is set out in the appended set of claims. The dependent claims set out particular embodiments.

To achieve the foregoing objective, the following technical solutions are used in embodiments of this application.

According to a first aspect, a method for reorganizing fragmented files is provided. The method is applied to a terminal having a management device and a flash memory device, where the flash memory device includes a flash memory controller and a storage medium, and the storage medium stores fragmented files. The method includes: The management device sends a first instruction to the flash memory controller, where the first instruction is for querying a fragmentation status of the fragmented files stored on the storage medium; the management device receives a first message from the flash memory controller, where the first message indicates the fragmentation status of the fragmented files stored on the storage medium; and the management device sends a second instruction to the flash memory controller in response to the first message when the fragmentation status indicates that physical addresses corresponding to the fragmented files stored on the storage medium are not consecutive, where the second instruction is for instructing the flash memory controller to reorganize the fragmented files on the storage medium.

Based on the first aspect, the management device may actively send the first instruction to the flash memory controller to query the fragmentation status stored on the storage medium. Correspondingly, the flash memory controller returns to the management device the fragmentation status of the fragmented files stored on the storage medium. When the fragmentation status indicates that the physical addresses corresponding to the fragmented files stored on the storage medium are not consecutive, the management device may send a second instruction to the flash memory controller to instruct the flash memory controller to reorganize the fragmented files on the storage medium. In this way, the management device can control the flash memory controller to reorganize the fragmented files on the storage medium when the physical addresses corresponding to the fragmented files stored on the storage medium are not consecutive, so that the fragmented files on the storage medium can be reorganized in a timely manner, and performance of the flash memory device can be restored in a timely manner.

In a possible implementation of the first aspect, that the management device sends a first instruction to the flash memory controller includes: The management device obtains first storage space and first duration, where the first storage space indicates available storage space of the storage medium, and the first duration indicates a time interval between a current moment and the last reorganization of the fragmented files on the storage medium by the flash memory controller; and the management device sends the first instruction to the flash memory controller if the management device determines that the first storage space matches the first duration.

In this implementation, the management device may obtain the available storage space of the storage medium, that is, the first storage space, and the time interval between the current moment and the last reorganization of the fragmented files on the storage medium by the flash memory controller, that is, the first duration. In view of this, the management device sends the first instruction to the flash memory controller if the management device determines that the first storage space matches the first duration. In other words, in this application, the first instruction is sent to the flash memory controller only when it is determined that the available storage space of the storage medium matches the time interval between the current moment and the last reorganization of the fragmented files on the storage medium by the flash memory controller, to query the fragmentation status of the flash memory device, thereby preventing the management device from frequently sending the first instruction to the flash memory controller, and affecting the service life of the management device.

In a possible implementation of the first aspect, that the management device determines that the first storage space matches the first duration includes: The management device queries stored registration information for target duration corresponding to the first storage space, where the target duration is a pre-configured time interval between two consecutive reorganizations of the fragmented files on the storage medium; and the management device determines that the first storage space matches the first duration if the first duration is longer than or equal to the target duration, where a correspondence between the first storage space and the target duration is recorded in the registration information.

In this implementation, the correspondence between the first storage space and the target duration may be pre-configured on the management device, so that the management device may determine whether the first storage space matches the first duration based on the obtained first storage space and first duration, thereby improving accuracy of matching between the first storage space and the first duration.

In a possible implementation of the first aspect, that the management device sends a first instruction to the flash memory controller includes: The management device sends the first instruction to the flash memory controller if the terminal is in a screen-off state and in a charging state and duration of the terminal being in the screen-off state reaches first preset duration; or the management device sends the first instruction to the flash memory controller if the terminal is in a screen-off state and in a charging state within a preset time period.

In this implementation, when the terminal is in the screen-off state and in the charging state and the duration of the terminal being in the screen-off state reaches the first preset duration, or when the terminal is in the screen-off state and in the charging state within the preset time period, the management device may send the first instruction to the flash memory controller, so that the management device can prevent reorganization of the fragmented files stored on the storage medium by the flash memory controller from being affected when the terminal is screen-on or has a low battery.

In a possible implementation of the first aspect, the method further includes: The management device receives a second message from the flash memory controller, where the second message indicates that the physical addresses corresponding to the fragmented files stored on the storage medium are consecutive; and the management device sends a third instruction to the flash memory controller in response to the second message, where the third instruction is for instructing the flash memory controller to stop reorganizing the fragmented files on the storage medium.

In this implementation, when the flash memory controller completes reorganization of the fragmented files stored on the storage medium, the flash memory controller further sends the second message to the management device. Then, the management device sends the third instruction to the flash memory controller in response to the second message, to instruct the flash memory controller to stop reorganizing the fragmented files on the storage medium. This is beneficial to prolonging the service life of the flash memory device.

In a possible implementation of the first aspect, the method further includes: The management device sends a third instruction to the flash memory controller if the management device does not receive a second message within first preset duration, where the second message indicates that the physical addresses corresponding to the fragmented files stored on the storage medium are consecutive; and the third instruction is for instructing the flash memory controller to stop reorganizing the fragmented files on the storage medium.

In this implementation, if the management device does not receive the second message within the first preset duration, the management device sends the third instruction to the flash memory controller. In other words, if duration for which the flash memory controller is reorganizing the fragmented files stored on the storage medium is longer than the first preset duration, the management device may instruct the flash memory controller to stop reorganizing the fragmented files on the storage medium, thereby prolonging the service life of the flash memory device.

In a possible implementation of the first aspect, before that the management device receives a second message from the flash memory controller, the method further includes: The management device sends a fourth instruction to the flash memory controller, where the fourth instruction is for querying progress of the flash memory controller in reorganizing the fragmented files on the storage medium; the management device receives a third message from the flash memory controller, where the third message indicates that the progress of reorganizing the fragmented files on the storage medium is not yet completed; and the management device resends the fourth instruction to the flash memory controller in response to the third message until the second message from the flash memory controller is received.

In this implementation, the management device may further send the fourth instruction to the flash memory controller to query the progress of the flash memory controller in reorganizing the fragmented files on the storage medium. If the progress returned by the flash memory controller indicates that the reorganization is uncompleted, the management device resends the fourth instruction to the flash memory controller. If the progress returned by the flash memory controller indicates that the reorganization is completed, the management device sends the second instruction to the flash memory controller, to instruct the flash memory controller to stop reorganizing the fragmented files stored on the storage medium, so as to prevent the flash memory controller from reorganizing, for a long time, the fragmented files stored on the storage medium, thereby prolonging the service life of the flash memory device.

In a possible implementation of the first aspect, that the management device sends a second instruction to the flash memory controller includes: The management device calls a storage manager service in an application framework layer to send the second instruction to a storage device driver in a kernel layer. The method further includes: The management device calls the storage device driver in the kernel layer to drive the flash memory controller to reorganize the fragmented files on the storage medium.

In a possible implementation of the first aspect, that the management device calls a storage manager service in an application framework layer to send the second instruction to a storage device driver in a kernel layer includes: The management device calls the storage manager service in the application framework layer to send the second instruction to the storage device driver in the kernel layer through a vold process.

According to a second aspect, a method for reorganizing fragmented files is provided. The method is applied to a terminal having a management device and a flash memory device, where the flash memory device includes a flash memory controller and a storage medium, and the storage medium stores fragmented files. The method includes: The flash memory controller receives a first instruction from the management device, where the first instruction is for querying a fragmentation status of the fragmented files stored on the storage medium; the flash memory controller sends a first message to the management device in response to the first instruction, where the first message indicates the fragmentation status of the fragmented files stored on the storage medium; the flash memory controller receives a second instruction from the management device when the fragmentation status indicates that physical addresses corresponding to the fragmented files stored on the storage medium are not consecutive; and the flash memory controller reorganizes the fragmented files on the storage medium in response to the second instruction.

In a possible implementation of the second aspect, the method further includes: The flash memory controller reorganizes the fragmented files on the storage medium based on a firmware algorithm inside the flash memory device if the flash memory device satisfies a preset reorganization condition, where the preset reorganization condition includes: available storage space of the storage medium is less than preset storage space; or the flash memory device satisfies a preset periodicity, and the preset periodicity is a periodicity, at which the flash memory controller recognizes the fragmented files on the storage medium, set in the firmware algorithm.

In a possible implementation of the second aspect, the method further includes: The flash memory controller sends a second message to the management device, where the second message indicates that the physical addresses corresponding to the fragmented files stored on the storage medium are consecutive; and the flash memory controller receives a third instruction from the management device; and the flash memory controller stops reorganizing the fragmented files on the storage medium in response to the third instruction.

In a possible implementation of the second aspect, the method further includes: The flash memory controller receives a third instruction from the management device if duration for which the flash memory controller is reorganizing the fragmented files on the storage medium is longer than the first preset duration; and the flash memory controller stops reorganizing the fragmented files on the storage medium in response to the third instruction.

In a possible implementation of the second aspect, that the flash memory controller sends a second message to the management device includes: The flash memory controller receives a fourth instruction from the management device; the flash memory controller queries, in response to the fourth instruction, progress of the flash memory controller in reorganizing the fragmented files on the storage medium; and if the flash memory controller has not completed reorganization of the fragmented files on the storage medium, the flash memory controller re-receives the fourth instruction from the management device until the flash memory controller completes the reorganization of the fragmented files on the storage medium, and the flash memory controller sends the second message to the management device.

According to a third aspect, a management device is provided. The management device is used in a terminal having a flash memory device, where the flash memory device includes a flash memory controller and a storage medium, and the storage medium stores fragmented files. The management device has a function of implementing the foregoing first aspect. The function may be implemented by using hardware, or may be implemented by hardware executing corresponding software. The hardware or software includes one or more modules corresponding to the foregoing function.

According to a fourth aspect, a flash memory device is provided. The flash memory device is used in a terminal having a management device, where the flash memory device includes a flash memory controller and a storage medium, and the storage medium stores fragmented files. The flash memory device has a function of implementing the foregoing second aspect. The function may be implemented by using hardware, or may be implemented by hardware executing corresponding software. The hardware or software includes one or more modules corresponding to the foregoing function.

According to a fifth aspect, a management device is provided. The management device is used in a terminal having a flash memory device, where the flash memory device includes a flash memory controller and a storage medium, and the storage medium stores fragmented files. The management device includes a memory and one or more processors. The memory is coupled to the processor. The memory is configured to store computer program code, and the computer program code includes computer instructions. When the processor executes the computer instructions, the management device is enabled to perform the following steps: The management device sends a first instruction to the flash memory controller, where the first instruction is for querying a fragmentation status of the fragmented files stored on the storage medium; the management device receives a first message from the flash memory controller, where the first message indicates the fragmentation status of the fragmented files stored on the storage medium; and the management device sends a second instruction to the flash memory controller in response to the first message when the fragmentation status indicates that physical addresses corresponding to the fragmented files stored on the storage medium are not consecutive, where the second instruction is for instructing the flash memory controller to reorganize the fragmented files on the storage medium.

In a possible implementation of the fifth aspect, when the processor executes the computer instructions, the management device is enabled to further perform the following steps: The management device obtains first storage space and first duration, where the first storage space indicates available storage space of the storage medium, and the first duration indicates a time interval between a current moment and the last reorganization of the fragmented files on the storage medium by the flash memory controller; and the management device sends the first instruction to the flash memory controller if the management device determines that the first storage space matches the first duration.

In a possible implementation of the fifth aspect, when the processor executes the computer instructions, the management device is enabled to specifically perform the following steps: The management device queries stored registration information for target duration corresponding to the first storage space, where the target duration is a pre-configured time interval between two consecutive reorganizations of the fragmented files on the storage medium; and the management device determines that the first storage space matches the first duration if the first duration is longer than or equal to the target duration, where a correspondence between the first storage space and the target duration is recorded in the registration information.

In a possible implementation of the fifth aspect, when the processor executes the computer instructions, the management device is enabled to specifically perform the following steps: The management device sends the first instruction to the flash memory controller if the terminal is in a screen-off state and in a charging state and duration of the terminal being in the screen-off state reaches first preset duration; or the management device sends the first instruction to the flash memory controller if the terminal is in a screen-off state and in a charging state within a preset time period.

In a possible implementation of the fifth aspect, when the processor executes the computer instructions, the management device is enabled to further perform the following steps: The management device receives a second message from the flash memory controller, where the second message indicates that the physical addresses corresponding to the fragmented files stored on the storage medium are consecutive; and the management device sends a third instruction to the flash memory controller in response to the second message, where the third instruction is for instructing the flash memory controller to stop reorganizing the fragmented files on the storage medium.

In a possible implementation of the fifth aspect, when the processor executes the computer instructions, the management device is enabled to further perform the following steps: The management device sends a third instruction to the flash memory controller if the management device does not receive a second message within first preset duration, where the second message indicates that the physical addresses corresponding to the fragmented files stored on the storage medium are consecutive; and the third instruction is for instructing the flash memory controller to stop reorganizing the fragmented files on the storage medium.

In a possible implementation of the fifth aspect, when the processor executes the computer instructions, the management device is enabled to further perform the following steps: Before that the management device receives a second message from the flash memory controller, the method further includes: The management device sends a fourth instruction to the flash memory controller, where the fourth instruction is for querying progress of the flash memory controller in reorganizing the fragmented files on the storage medium; the management device receives a third message from the flash memory controller, where the third message indicates that the progress of reorganizing the fragmented files on the storage medium is not yet completed; and the management device resends the fourth instruction to the flash memory controller in response to the third message until the second message from the flash memory controller is received.

In a possible implementation of the fifth aspect, when the processor executes the computer instructions, the management device is enabled to specifically perform the following steps: The management device calls a storage manager service in an application framework layer to send the second instruction to a storage device driver in a kernel layer. The method further includes: The management device calls the storage device driver in the kernel layer to drive the flash memory controller to reorganize the fragmented files on the storage medium.

In a possible implementation of the fifth aspect, when the processor executes the computer instructions, the management device is enabled to specifically perform the following steps: The management device calls the storage manager service in the application framework layer to send the second instruction to the storage device driver in the kernel layer through a vold process.

According to a sixth aspect, a flash memory device is provided. The flash memory device is used in a terminal having a management device, where the flash memory device includes a flash memory controller and a storage medium, and the storage medium stores fragmented files. The flash memory device includes a memory and one or more processors. The memory is coupled to the processor. The memory is configured to store computer program code, and the computer program code includes computer instructions. When the processor executes the computer instructions, the flash memory device is enabled to perform the following steps: The flash memory controller receives a first instruction from the management device, where the first instruction is for querying a fragmentation status of the fragmented files stored on the storage medium; the flash memory controller sends a first message to the management device in response to the first instruction, where the first message indicates the fragmentation status of the fragmented files stored on the storage medium; the flash memory controller receives a second instruction from the management device when the fragmentation status indicates that physical addresses corresponding to the fragmented files stored on the storage medium are not consecutive; and the flash memory controller reorganizes the fragmented files on the storage medium in response to the second instruction.

In a possible implementation of the sixth aspect, when the processor executes the computer instructions, the flash memory device is enabled to further perform the following steps: The flash memory controller reorganizes the fragmented files on the storage medium based on a firmware algorithm inside the flash memory device if the flash memory device satisfies a preset reorganization condition, where the preset reorganization condition includes: available storage space of the storage medium is less than preset storage space; or the flash memory device satisfies a preset periodicity, and the preset periodicity is a periodicity, at which the flash memory controller recognizes the fragmented files on the storage medium, set in the firmware algorithm.

In a possible implementation of the sixth aspect, when the processor executes the computer instructions, the flash memory device is enabled to further perform the following steps: The flash memory controller sends a second message to the management device, where the second message indicates that the physical addresses corresponding to the fragmented files stored on the storage medium are consecutive; and the flash memory controller receives a third instruction from the management device; and the flash memory controller stops reorganizing the fragmented files on the storage medium in response to the third instruction.

In a possible implementation of the sixth aspect, when the processor executes the computer instructions, the flash memory device is enabled to further perform the following steps: The flash memory controller receives a third instruction from the management device if duration for which the flash memory controller is reorganizing the fragmented files on the storage medium is longer than the first preset duration; and the flash memory controller stops reorganizing the fragmented files on the storage medium in response to the third instruction.

In a possible implementation of the sixth aspect, when the processor executes the computer instructions, the flash memory device is enabled to specifically perform the following steps: The flash memory controller receives a fourth instruction from the management device; the flash memory controller queries, in response to the fourth instruction, progress of the flash memory controller in reorganizing the fragmented files on the storage medium; and if the flash memory controller has not completed reorganization of the fragmented files on the storage medium, the flash memory controller re-receives the fourth instruction from the management device until the flash memory controller completes the reorganization of the fragmented files on the storage medium, and the flash memory controller sends the second message to the management device.

According to a seventh aspect, a terminal is provided. The terminal includes a management device and a flash memory device, where the flash memory device includes a flash memory controller and a storage medium, and the storage medium stores fragmented files. The management device is configured to perform the method in the first aspect or any one of the first aspect. The flash memory controller is configured to perform the method in the second aspect or any one of the second aspect.

According to an eighth aspect, a chip system is provided. The chip system includes at least one processor and at least one interface circuit. The processor is connected to the interface circuit through a line. The processor is configured to execute computer instructions to implement the method in the first aspect or any one of the first aspect, or implement the method in the second aspect or any one of the second aspect.

According to a ninth aspect, a computer-readable storage medium is provided. The computer-readable storage medium stores instructions. When the instructions run on a computer, the computer is enabled to perform the method in any one of the first aspect, or perform the method in any one of the second aspect.

According to a tenth aspect, a computer program product including instructions is provided. When the instructions are run on a computer, the computer is enabled to perform the method in any one of the first aspect, or perform the method in any one of the second aspect.

For the technical effects brought by any one of the designs in the second aspect to the tenth aspect, reference may be made to the technical effects brought by different designs in the first aspect, and details are not described herein again.

### BRIEF DESCRIPTION OF DRAWINGS

FIG. 1 is a schematic diagram of a structure of a terminal according to an embodiment of this application;
FIG. 2 is a schematic diagram of fragment reorganization according to an embodiment of this application;
FIG. 3 is a schematic diagram of a structure of a mobile phone according to an embodiment of this application;
FIG. 4 is a diagram of a software framework of a mobile phone according to an embodiment of this application;
FIG. 5 is a schematic flowchart of a method for reorganizing fragmented files according to an embodiment of this application;
FIG. 6 is a schematic flowchart of another method for reorganizing fragmented files according to an embodiment of this application;
FIG. 7 is a schematic flowchart of still another method for reorganizing fragmented files according to an embodiment of this application;
FIG. 8 is a schematic diagram of read and write performance of a flash memory device according to an embodiment of this application;
FIG. 9 is a schematic flowchart of still another method for reorganizing fragmented files according to an embodiment of this application;
FIG. 10 is a schematic flowchart of yet still another method for reorganizing fragmented files according to an embodiment of this application; and
FIG. 11 is a schematic diagram of a structure of a chip system according to an embodiment of this application.

### DESCRIPTION OF EMBODIMENTS

To enable a person skilled in the art to better understand the solutions in embodiments of this application, the following clearly and completely describes the technical solutions in embodiments of this application with reference to the accompanying drawings in embodiments of this application. Apparently, the described embodiments are merely some rather than all of embodiments of this application. All other embodiments obtained by a person skilled in the art based on embodiments of this application without creative efforts shall fall within the protection scope of this application.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features. In the description of embodiments of this application, "a plurality of" means two or more unless otherwise described.

Before embodiments of this application are described, related terms in embodiments of this application are first explained and described.

A fragmented file is fragmented data on a flash memory device. Files scattered across a plurality of different storage areas in the flash memory device are fragmented files. The fragmented files are results of inconsecutive storage of an application or a file. To be specific, different parts of a given application or file are not stored in a set of consecutive storage blocks on the flash memory device.

Currently, an existing scheme for fragment reorganization of the flash memory device is generally implemented by using a file system ineffectively occupied space cleanup method based on a fstrim command. For example, a terminal sends the fstrim command to the flash memory device on a file system layer, to notify the flash memory device about specific address space that is ineffectively occupied. However, after the flash memory device receives the command for cleaning ineffectively occupied space sent by the terminal, a timing for triggering the flash memory device to perform fragment reorganization depends on a firmware algorithm inside the device. For example, the firmware algorithm specifies to perform fragment reorganization periodically (for example, every 10 hours or 15 hours). In this case, if the timing for triggering the flash memory device to perform fragment reorganization has not arrived (that is, time has not reached 10 hours or 15 hours), even if the flash memory device receives the command for cleaning ineffectively occupied space sent by the terminal, the flash memory device does not perform fragment reorganization.

Alternatively, the firmware algorithm specifies to perform fragment reorganization when storage space of the flash memory device is insufficient (for example, there is 20% of available storage space remaining). In this case, if the timing for triggering the flash memory device to perform fragment reorganization has not arrived (that is, a remaining capacity of the available storage space is more than 20%), even if the flash memory device receives the command for cleaning inefficiently occupied space sent by the terminal, the flash memory device does not perform fragment reorganization.

Apparently, due to the restricted condition set in the firmware algorithm, after receiving the command for cleaning inefficiently occupied space sent by the terminal, the flash memory device needs to wait until the restriction condition is satisfied before performing fragment reorganization. Consequently, according to the existing scheme for fragment reorganization of the flash memory device, performance of the flash memory device cannot be restored in a timely manner because fragments reorganization (that is, a GC operation) cannot be performed on the flash memory device in a timely manner. As a result, read and write performance of the flash memory device is affected.

To resolve the foregoing problem, the method for reorganizing fragmented files provided in this application may be applied to a terminal having a management device and a flash memory device. In embodiments of this application, the management device may actively query a fragmentation status of the flash memory device. When fragmented files stored in the flash memory device need to be reorganized, the management device may send an instruction to the flash memory device. After the flash memory device receives the instruction from the management device, the flash memory device may perform fragment reorganization in response to the instruction. In this way, the management device actively queries the fragmentation status of the flash memory device, and when the fragmented files stored in the flash memory device need to be reorganized, the management device sends the instruction to the flash memory device, to cause the flash memory device to reorganize the fragmented files in a timely manner, thereby resolving the problem that the performance of the flash memory device cannot be restored in a timely manner.

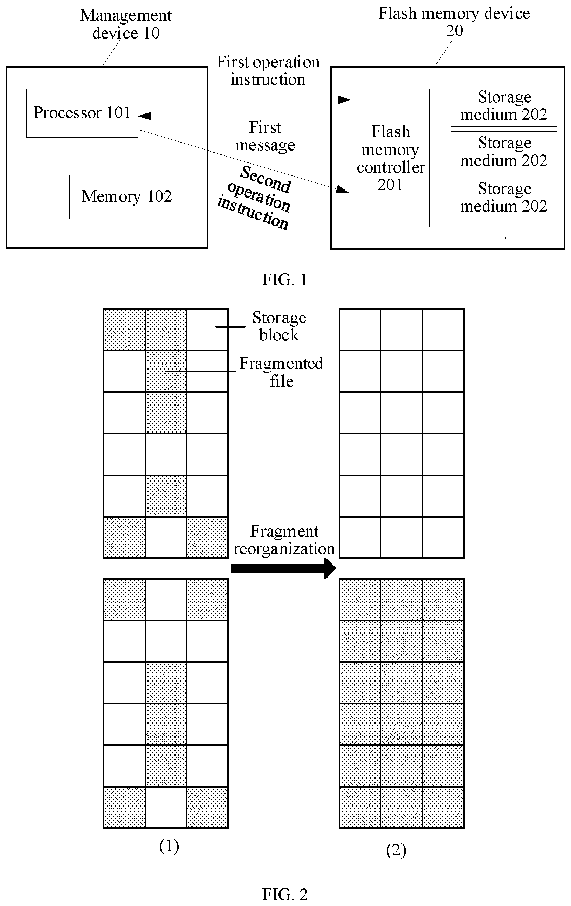

The method provided in embodiments of this application may be applied to a terminal. As shown in FIG. 1, the terminal includes a management device 10 and a flash memory device 20 (or referred to as a FLASH memory device).

It should be noted that the management device 10 may be integrated in the terminal, or the management device 10 may be a device independent of the terminal. This is not limited in this application. In the following embodiments, an example in which the management device 10 is integrated into the terminal is used.

The management device 10 is a control center of the terminal, and may control the terminal to perform various functions and data processing. The management device 10 may be a chip with a memory 102. For example, the management device 10 may be a system on chip (system on chip, SoC). For example, as shown in FIG. 1, the management device 10 may include a processor 101 and a memory 102. The processor 101 may be a central processing unit (central processing unit, CPU). The processor 101 may read a stored instruction or data from the memory 102 to control the terminal to perform various functions and data processing.

The flash memory device 20 is mainly configured to store software, data, or the like in the terminal (such as a mobile phone and a tablet computer), for example, to store operating system software, application software, image and text, a document, or the like. Still as shown in FIG. 1, the flash memory device 20 may include a flash memory controller 201 and at least one storage medium 202. The flash memory device 20 may be an eMMC memory device or a UFS memory device. The storage medium may be a NAND flash memory chip configured to store data. In some embodiments, the storage medium 202 may include M storage blocks, and each storage block is configured to store software or data in the terminal. M is a positive integer.

The flash memory controller 201 may be responsible for internal or external control and communication. The flash memory controller 201 may be responsible for operations of reading, writing, and erasing on the storage medium in the flash memory device 20, address space management, and the like. In addition, the flash memory controller 201 may be responsible for communication between the flash memory device 20 and the management device 10 in the terminal. For example, the flash memory controller 201 may receive and respond to commands from the management device 10 in the terminal to store, on a corresponding storage medium, data to be stored by the management device 10 in the terminal and to extract, from the corresponding storage medium, data to be read by the management device 10 in the terminal and send the data to the management device 10 in the terminal.

For example, as shown in FIG. 1, the management device 10 may send, by using the processor 101, an instruction to the flash memory controller 201 included in the flash memory device 20. For example, the processor 101 may actively send a first instruction to the flash memory controller 201, to query a fragmentation status of the flash memory device 20. Then, the flash memory controller 201 returns a first message to the processor 101 in response to the first instruction, that is, returns the fragmentation status of the flash memory device 20. In some embodiments, when the fragmentation status returned by the flash memory controller 201 to the processor 101 is a first state, the processor 101 sends a second instruction to the flash memory controller 201 in response to the first message, to instruct the flash memory controller 201 to perform fragment reorganization. Then, the flash memory controller 201 performs the fragment reorganization in response to the second instruction. In this embodiment of this application, that the flash memory controller 201 performs the fragment reorganization means that the flash memory controller 201 reorganizes fragmented files on the storage medium. In some other embodiments, when the fragmentation status returned by the flash memory controller 201 to the processor 101 is a second state, the processor 101 does not send the second instruction to the flash memory controller 201. In other words, the processor 101 does not instruct the flash memory controller 201 to perform the fragment reorganization.

The fragmentation status includes the first state and the second state. The first state may indicate that physical addresses corresponding to fragmented files stored on the storage medium are not consecutive. The second state may indicate that physical addresses corresponding to fragmented files stored on the storage medium are consecutive.

In some embodiments, as shown in (1) of FIG. 2, assuming that the storage medium includes M (for example, 36) storage blocks and a plurality of fragmented files are stored in N (for example, 14) storage blocks, as shown in (1) of FIG. 2, physical addresses in the N storage blocks corresponding to the plurality of fragmented files stored in the N storage blocks are not consecutive. N is a positive integer, and N≤M.

In an embodiment of this application, when the plurality of fragmented files are stored in the N storage blocks, each of the plurality of fragmented files corresponds to a physical address. A physical address of any one of the fragmented files is a physical address where the fragmented file is stored in the N storage blocks.

A size of a fragmented file stored in any one of the N storage blocks is equal to a size of storage space of the storage block. In view of this, when a size of a fragmented file is equal to a size of storage space of one storage block, the fragmented file may be stored in one storage block. Alternatively, when a sum of sizes of a plurality of fragmented files is equal to a size of storage space of one storage block, the plurality of fragmented files may be stored in one storage block. Alternatively, when a size of a fragmented file is larger than a size of storage space of one storage block, the fragmented file may be stored in two or more storage blocks. This is not limited in this application.

It should be noted that when the plurality of fragmented files are stored in a storage block, first physical addresses corresponding to the plurality of fragmented files in the storage block are also not consecutive.

In some embodiments, after the flash memory controller 201 reorganizes the fragmented files on the storage medium, the physical addresses corresponding to the fragmented files stored on the storage medium are not consecutive. For example, as shown in (2) of FIG. 2, the physical addresses corresponding to the fragmented files stored in the plurality of storage blocks are consecutive. In other words, the fragmented files are centrally stored in the plurality of storage blocks.

In some embodiments, the flash memory controller 201 performs the fragment reorganization according to the sizes of the plurality of fragmented files. In some other embodiments, the flash memory controller 201 may select an unoccupied storage block from the M storage blocks to perform the fragment reorganization. In some still other embodiments, the flash memory controller 201 may select a storage block with largest remaining storage space among the N storage blocks as a target storage block, and then store the plurality of fragmented files into the target storage block. Certainly, the flash memory controller 201 may alternatively use other methods to perform the fragment reorganization. This is not limited in embodiments of this application, provided that the physical addresses corresponding to the fragmented files stored in the storage medium are consecutive finally. These methods shall fall within the protection scope of embodiments of this application.

The terminal may be, for example, on any one of terminals such as a mobile phone, a wearable device, an augmented reality (augmented reality, AR) device/a virtual reality (virtual reality, VR) device, a tablet computer, a notebook computer, an ultra-mobile personal computer (ultra-mobile personal computer, UMPC), a netbook, and a personal digital assistant (personal digital assistant, PDA). Certainly, a specific type of the terminal is not limited in the following embodiments.

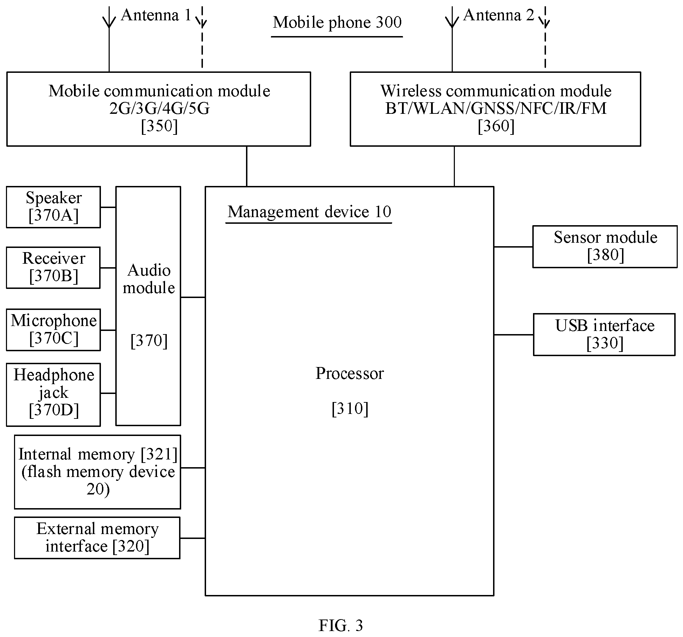

As shown in FIG. 3, the terminal in embodiments of this application may be a mobile phone 300. This embodiment is described in detail below by using the mobile phone 300 as an example. It may be understood that the mobile phone 300 shown in the figure is merely an example of the terminal, and the mobile phone 300 may include more or fewer parts than those shown in the figure, or combine two or more parts, or have a different part configuration.

As shown in FIG. 3, the mobile phone 300 may specifically include: a management device 10 (where the management device 10 may include a processor 310 (such as the processor 101 shown in FIG. 1)), an external memory interface 320, an internal memory 321 (where the internal memory 321 may include the flash memory device 20 shown in FIG. 1), a universal serial bus (universal serial bus, USB) interface 330, an antenna 1, an antenna 2, a mobile communication module 350, a wireless communication module 360, an audio module 370, a speaker 370A, a receiver 370B, a microphone 370C, a headphone jack 370D, a sensor module 380, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors.

A memory may be further disposed in the processor 310, to store an instruction and data. In some embodiments, the memory in processor 310 is a cache. The memory may store an instruction or data that is just used or cyclically used by the processor 310. If the processor 310 needs to use the instruction or the data again, the processor 310 may directly invoke the instruction or the data from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

In this embodiment of this application, the processor 310 may be the processor 101 included in the management device 10 in embodiments of this application.

A wireless communication function of the mobile phone 300 may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna of the mobile phone 300 may be configured to cover one or more communication frequency bands. Different antennas may be further reused, thereby improving utilization of the antennas. For example, the antenna 1 may be reused as a diversity antenna of a wireless local area network. In some other embodiments, the antennas may be used with a tuning switch.

The mobile communication module 350 may provide a solution applied to the mobile phone 300 for wireless communication including 2G/3G/4G/5G, and the like. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering and amplification on the received electromagnetic wave, and send the electromagnetic wave to the modem processor for demodulation. The mobile communication module 350 may further amplify a signal modulated by the modem processor, and convert the signal into an electromagnetic wave by using the antenna 1 for radiation. In some embodiments, at least some functional modules of the mobile communication module 350 may be disposed in the processor 310. In some embodiments, at least some functional modules of the mobile communication module 350 may be disposed in a same device as at least some modules of the processor 310.

The wireless communication module 360 may provide a solution to wireless communication applied to the mobile phone 300, for example, a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 360 may be one or more devices that integrate at least one communication processing module. The wireless communication module 360 receives an electromagnetic wave by using the antenna 2, performs frequency modulation and filtering processing on the electromagnetic wave signal, and sends the processed signal to the processor 310. The wireless communication module 360 may further receive a to-be-sent signal from the processor 310, perform frequency modulation and amplification on the to-be-sent signal, and convert the signal into an electromagnetic wave by using the antenna 2 for radiation.

In some embodiments, in the mobile phone 300, the antenna 1 is coupled to the mobile communication module 350, and the antenna 2 is coupled to the wireless communication module 360, so that the mobile phone 300 can communicate with a network and another device based on a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The external memory interface 320 may be configured for connection to an external storage card such as a micro SD card, to expand a storage capability of the mobile phone 300. The external storage card communicates with the processor 310 via the external memory interface 320, to implement a data storage function, for example, to store files such as music and a video in the external storage card.

The internal memory 321 may be configured to store computer-executable program code. The executable program code includes instructions. The processor 310 runs the instructions stored in the internal memory 321, to perform various function applications and data processing of the mobile phone 300. The internal memory 321 may include a program storage area and a data storage area. The program storage area may store an operating system, an application required by at least one function (such as a sound playback function and an image display function), and the like. The data storage area may store data (such as audio data and an address book) created during use of the mobile phone 300, and the like. In addition, the internal memory 321 may include a high-speed random access memory, or may include a non-volatile memory, such as at least one magnetic disk memory, a flash memory, or a universal flash storage (universal flash storage, UFS).

Certainly, the mobile phone 300 may further include a charging management module, a power management module, a battery, a press key, an indicator, one or more SIM card interfaces, and the like. This is not limited in embodiments of this application.

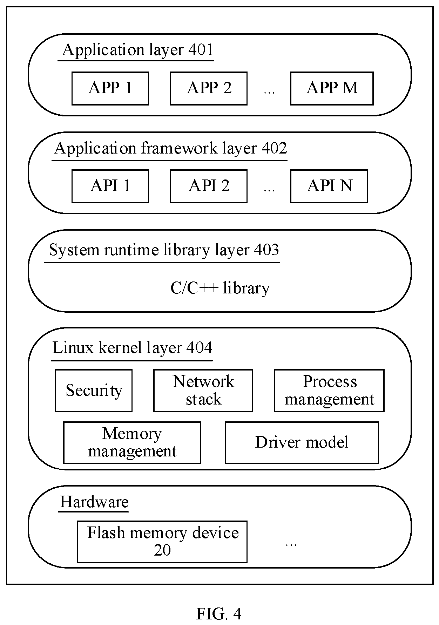

Further, hardware shown in the mobile phone 300 may run an operating system such as Android or IOS. This is not limited in embodiments of this application. An Android operating system is used as an example. As shown in FIG. 4, the Android operating system may be divided into four layers from high to low: an application layer 401, an application framework layer 402 (that is, a framework layer), a system runtime library layer 403 (that is, a libraries layer), and a Linux kernel layer 404 (that is, a kernel layer).

The Linux kernel layer 404 may be configured to control functions of the mobile phone 300 such as security (security), memory management (memory management), process management (process management), network stack (network stack), and driver model (driver model). The Linux kernel layer 204 also serves as an abstraction layer between hardware (for example, the flash memory device 20) and a software stack, and can hide specific hardware details to provide a unified service for upper layers (the system runtime library layer 403, the application framework layer 402, and the application layer 401).

The system runtime library layer 403 includes some C/C++ libraries, such as a media library, a system C library, and a surface manager (surface manager) library. These libraries can be used by different components in the Android system. The system runtime library layer 403 can provide a service for a developer via the framework layer 402.

The framework layer 402 provides, for a developer, an application programming interface (application programming interface, API) framework used for full access to an application. Specifically, the framework layer 402 provides many APIs for developing applications. An APP that meets a relevant service requirement can be constructed by calling a corresponding API.

The application layer 401 mainly includes an APP written in Java. When a user performs an operation on an operation interface of the APP, the user interacts with the system runtime library layer 403 or the Linux kernel layer 404 by calling the relevant API in the framework layer 402 to implement a function corresponding to the operation interface.

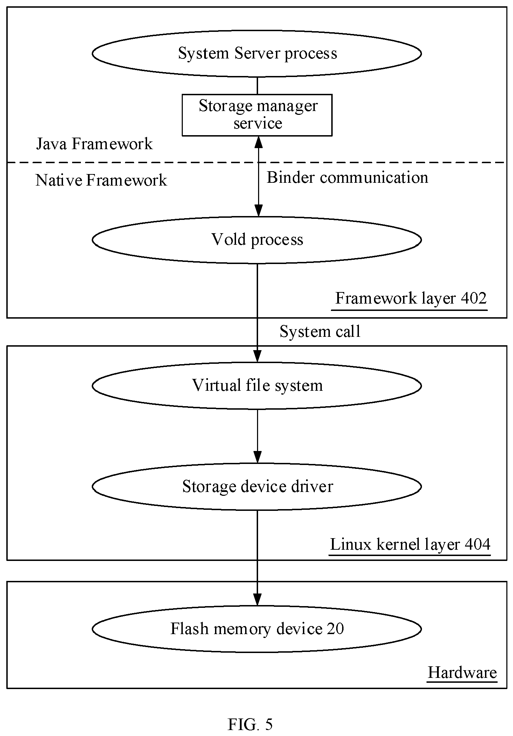

As shown in FIG. 5, a system server (system server) process is run on the framework layer 402. The system server process can provide almost all system services for the mobile phone 300, such as a power manager service (power manager service, PMS), an activity manager service (activity manager service, AMS), a window manager service (window manager service, WMS), a network management service (network management service, NMS), an input manager service (input manager service, IMS), and a storage manager service (storage manager service).

Still as shown in FIG. 5, a vold daemon (volume daemon) process is further run on the framework layer 402. The vold process may be used for managing storage (such as a USB, an SD card, and a flash memory device) in the mobile phone 300.

For example, the system service thread (such as the storage manager service thread) may communicate with the vold process by using a binder service or a socket (socket) service.

All of the foregoing system services are located in Java framework space and are in the system server process. The vold process is in Native framework space, and all elements in the vold process are in user space (user space).

Further, as shown in FIG. 5, the vold process is between the Linux kernel layer 404 and the storage manager service in the framework layer 402, and is a bridge connecting the Linux kernel layer 404 and the storage manager service in the framework layer 402. For example, after the vold process is started, communication between the Linux kernel layer 404 and the storage manager service in the framework layer 402 can be implemented.

As shown in FIG. 5, the Linux kernel layer 404 may be configured to control a storage device driver (storage device driver) function of the mobile phone 300. The Linux kernel layer 404 introduces an abstraction layer between the user space (such as the vold process) and the storage device driver. The abstraction layer may be a virtual file system (virtual file system, VFS). The VFS can provide a system interface for the user space (such as the vold process), and the vold process may perform a system call (system call) to call the system interface provided by the VFS, so as to implement communication between the system interface and the storage device driver in the Linux kernel layer 404.

The storage device driver is configured to drive hardware of the mobile phone 300 (such as the flash memory device 20) to perform a corresponding function. For example, the storage device driver may send a corresponding operation instruction to the flash memory device 20, to drive the flash memory device 20 to perform fragment reorganization.

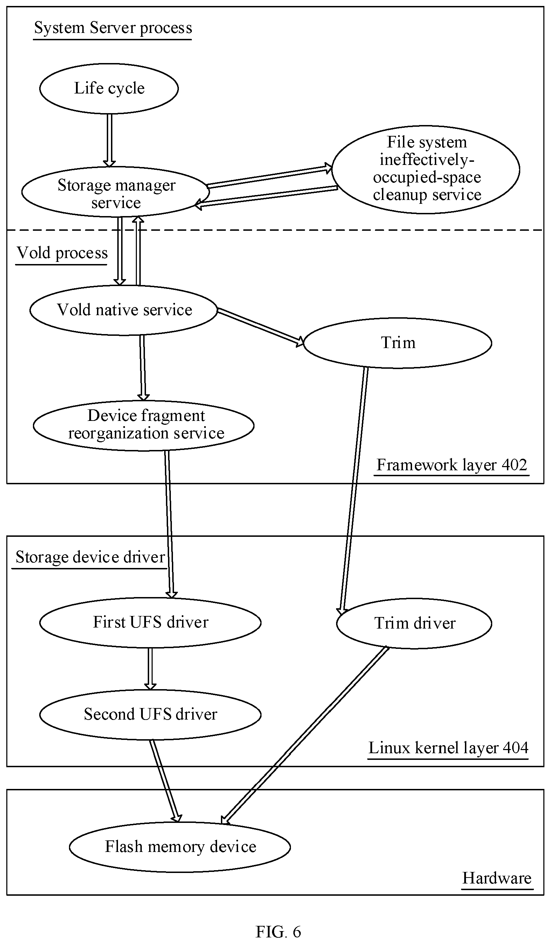

Further, as shown in FIG. 6, the system server (system server) process mainly runs life cycle (broad cast receivers), a storage manager service (storage manager service), and a file system ineffectively occupied space cleanup service (fstrim service idler).

The broad cast receivers are for broadcasting status information of the mobile phone 300, such as broadcasting a screen-on or screen-off state of the mobile phone 300. The storage manager service is for monitoring the status information of the mobile phone 300. For example, when the storage manager service monitors that the mobile phone 300 is in the screen-off state, the storage manager service detects whether the mobile phone 300 is in a charging state. If the mobile phone 300 is in the charging state, the storage manager service sends a notification to the vold process based on a binder communication mechanism. For example, the storage manager service may call a preset interface (such as runidleMaint) to send the notification to the vold process, to notify the vold process that the mobile phone 300 is in the screen-off state and in the charging state.

In addition, the storage manager service sends a request to the fstrim service idler to request an ineffectively occupied physical address. Then, upon receipt of the request from the storage manager service, the fstrim service idler returns the ineffectively occupied physical address to the storage manager service. For example, the storage manager service may call a preset interface (such as scheduleFstrim) to send the request to the fstrim service idler. Correspondingly, the fstrim service idler may call a preset interface (such as runidleMaint) to return the ineffectively occupied physical address to the storage manager service. The ineffectively occupied physical address described herein refers to a physical address where a fragmented file is stored in a storage block. In view of this, in this embodiment of this application, the fstrim service idler returns the ineffectively occupied physical address to the storage manager service. In other words, the fstrim service idler returns the fragmentation status of the flash memory device to the storage manager service, and the fragmentation status indicates that there is a need for reorganization. Then, the storage manager service continues to perform the following steps based on the ineffectively occupied physical address returned by the fstrim service idler, for example, continues to send a notification to the vold process, and the vold process sends an instruction to the Linux kernel layer 404, to instruct the flash memory controller to perform fragment reorganization.

Still as shown in FIG. 6, the vold process mainly runs a vold native service (vold native service), a device fragment reorganization service (runDeGc), and a trim driver.

The vold native service is for receiving the notification sent by the storage manager service, that is, receiving the notification that the mobile phone 300 is in the screen-off state and in the charging state, sent by the storage manager service. In addition, when the vold native service receives the notification sent by the storage manager service, the vold native service returns a result to the storage manager service, that is, returns to the storage manager service a result indicating receipt of the notification that the mobile phone 300 is in the screen-off state and in the charging state.

Further, after receiving the notification sent by the storage manager service, the vold native service may detect whether duration of the mobile phone 300 being in the screen-off state reaches preset duration (such as five minutes or 10 minutes). If the duration of the mobile phone 300 being in the screen-off state reaches the preset duration, the vold native service calls the preset interface (such as runidleMaint) to start the runDeGc and the function (trim). For example, after the runDeGc is started, an instruction for performing fragment reorganization on the flash memory device may be sent to the storage device driver in the Linux kernel layer 404. After the trim is started, the ineffectively occupied physical address can be sent to the storage device driver in the Linux kernel layer 404.

Still as shown in FIG. 6, the storage device driver includes a first UFS driver (or referred to as a getDeFregStatus driver), a second UFS driver (or referred to as a trigDeGc driver), and a trim driver. The first UFS driver is configured to obtain a fragmentation status from the flash memory device. The second UFS driver is configured to drive the flash memory device to perform fragment reorganization. The trim driver is configured to send the physical address to the flash memory device. Then, the flash memory device can perform the fragment reorganization based on the ineffectively occupied physical address sent by the trim driver.

For example, after being started, the runDeGc sends to the first UFS driver the instruction for performing fragment reorganization on the flash memory device. Upon receipt of the instruction sent by the runDeGc, the first UFS driver obtains the fragmentation status from the flash memory device. Then, after the first UFS driver obtains the fragmentation status of the flash memory device, if the fragmentation status of the flash memory device indicates that there is a need for fragment reorganization, the first UFS driver sends a driving instruction to the second UFS driver, and upon receipt of the driving instruction sent by the first UFS driver, the second UFS driver drives the flash memory device to perform the fragment reorganization.

For example, after being started, the runDeGc calls a preset interface (such as manual_gc) to send to the first UFS driver the instruction for performing fragment reorganization on the flash memory device. Upon receipt of the instruction sent by the runDeGc, the first UFS driver calls a preset interface (such as getDeFregStatus) to obtain the fragmentation status from the flash memory device. Then, after the first UFS driver obtains the fragmentation status of the flash memory device, if the fragmentation status of the flash memory device indicates that there is a need for fragment reorganization, the first UF S driver calls a preset interface (trigDeGc) to send a driving instruction to the second UFS driver. The second UFS driver drives the flash memory controller to perform the fragment reorganization based on a CMD (command) command.

A method for reorganizing fragmented files provided in embodiments of this application is applicable to a terminal having a management device and a flash memory device. The flash memory device includes a flash memory controller and a storage medium, where the storage medium includes M storage blocks. For the convenience of description, in embodiments of this application, a management device and a flash memory controller are used as examples to describe the technical solutions provided in embodiments of this application.

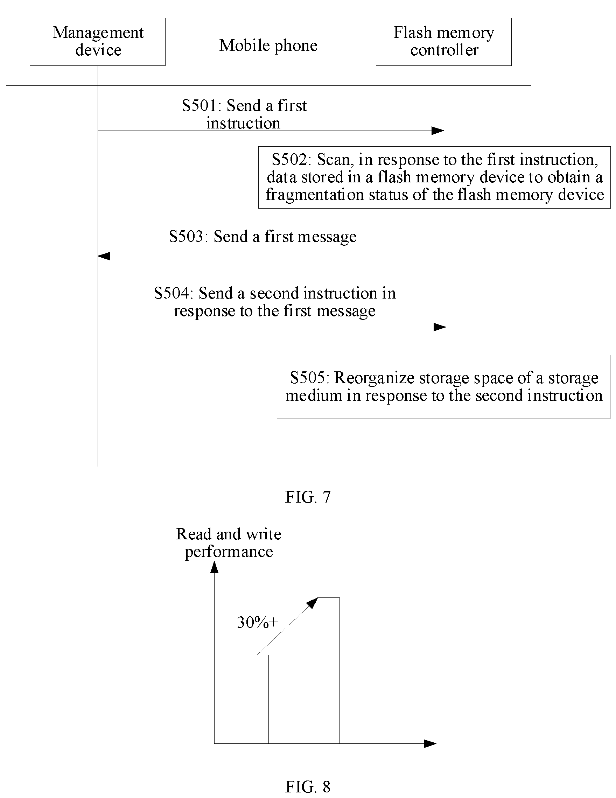

As shown in FIG. 7, the method provided in embodiments of this application may include the following steps.

S501: A management device sends a first instruction to a flash memory controller in response to a specified condition being satisfied.

The first instruction is for querying a fragmentation status of a flash memory device. The management device may be a CPU in a mobile phone.

For example, with reference to FIG. 5 and FIG. 6, the management device may send the first instruction to the flash memory controller by calling the preset interface (such as getDeFregStatus) based on the runDeGc included in the storage device driver (storage device driver) in the Linux kernel layer 404.

In some embodiments, the first instruction sent by the management device to the flash memory controller may be, for example, Read Fragmentation Status.

Correspondingly, the flash memory controller receives the first instruction from the management device.

In some embodiments, to avoid affecting the flash memory controller in reorganizing storage space of a storage medium, the management device may send the first instruction to the flash memory controller in response to the specified condition being satisfied. The specified condition may include: a mobile phone is in a screen-off state and/or battery level information of the mobile phone satisfies a preset condition.

For example, the management device may send the first instruction to the flash memory controller when the mobile phone is in the screen-off state. In this way, when the management device detects that the flash memory device needs to perform fragment reorganization, because the mobile phone is in the screen-off state at this time, performing fragment reorganization in this case is conducive to improving the efficiency of the fragment reorganization.

For example, the management device may send the first instruction to the flash memory controller when the mobile phone is in the screen-off state. For example, as shown in FIG. 6, the management device may register a listener with the broadcast receivers by running the storage manager service of the framework layer 402, to monitor the status information of the mobile phone. When the storage manager service detects that the mobile phone is in the screen-off state, the management device sends the first instruction to the flash memory controller by running the storage manager service of the framework layer 402.

Further, because the flash memory controller consumes high power when performing fragment reorganization. In other words, the flash memory controller has a high requirement on a battery level of the mobile phone when performing fragment reorganization. Therefore, the management device may send the first instruction to the flash memory controller when the battery level information of the mobile phone satisfies the preset condition. The preset condition may be that the mobile phone is in a charging state, or the battery level of the mobile phone is greater than a preset battery level (such as 20%).

In this embodiment of this application, the management device may send the first instruction to the flash memory controller when the mobile phone is in the screen-off state and/or the battery level information satisfies the preset condition. In the following embodiment, an example in which the management device sends the first instruction to the flash memory controller when the mobile phone is in the screen-off state and the battery level information satisfies the preset condition is used.

In some embodiments of this application, when the management device determines that the mobile phone is in the screen-off state and in the charging state, the mobile phone may be triggered to start timing of a timer. When the timer times out, the management device sends the first instruction to the flash memory controller. Duration of the timer may be set based on specific needs (for example, set to five minutes or 10 minutes), and is not limited.

In other words, when the management device determines that the mobile phone is in the screen-off state and in the charging state, and screen-off duration of the mobile phone (such as second preset duration) reaches five minutes or 10 minutes, the management device sends the first instruction to the flash memory controller.

In some other embodiments of this application, when the management device determines that the mobile phone is in the screen-off state, and the battery level of the mobile phone is greater than 20%, the mobile phone may be triggered to start timing of the timer. When the screen-off duration of the mobile phone reaches the second preset duration, the management device sends the first instruction to the flash memory controller.

In some still other embodiments of this application, when the mobile phone is in the screen-off state and in the charging state, and current time is within a preset time period (such as 3:00-6:00 am), the management device sends the first instruction to the flash memory controller. Certainly, the management device may alternatively send the first instruction to the flash memory controller when the mobile phone is in the screen-off state, the battery level of the mobile phone is greater than 20%, and the current time is within the preset time period.

It should be noted that the foregoing description is merely an example of a timing for the management device to send the first instruction to the flash memory controller, and does not constitute a limitation on this application. Certainly, the management device may alternatively send the first instruction to the flash memory controller at other appropriate times, provided that reorganization of the storage space of the storage medium by the flash memory controller is not affected, which shall fall within the protection scope of this application.

To prevent the flash memory controller from frequently performing fragment reorganization and affecting the service life of the flash memory device, further, the management device may further detect first storage space of the flash memory device and first duration. If the management device determines that the first storage space matches the first duration, the management device sends the first instruction to the flash memory controller. The first storage space indicates available storage space of the flash memory device, and the first duration indicates a time interval between a current moment and the last reorganization of the storage space of the flash memory device by the flash memory controller.

In some embodiments, that the first storage space matches the first duration means that in the first storage space, the first duration is longer than or equal to target duration. The target duration is a pre-configured time interval between two consecutive reorganizations of the storage space of the flash memory device. The target duration is set to avoid frequent fragment reorganization of the flash memory device.

In other words, in this embodiment of this application, in the first storage space, when the time interval between the current moment and the last reorganization of the storage space of the flash memory device by the flash memory device is greater than or equal to the target duration, the management device sends the first instruction to the flash memory controller, and the flash memory controller performs fragment reorganization, thereby preventing the service life of the flash memory device being affected by frequent fragment reorganization performed by the flash memory controller.

For example, the management device may query stored registration information for target duration corresponding to the first storage space. If the first duration is longer than or equal to the target duration, the management device determines that the first storage space matches the first duration, and then the management device sends the first instruction to the flash memory controller. Correspondingly, if the first duration is shorter than the target duration, the management device determines that the first storage space does not match the first duration, and then the management device does not send the first instruction to the flash memory controller, that is, does not perform S501.

In some embodiments, the registration information is saved in the management device, and a correspondence between the first storage space and the target duration is recorded in the registration information. The correspondence may be saved in the management device in the form of a table or an array. For example, the correspondence may be shown in Table 1 below.

**Table 1**

| First storage space (GB) | Target duration (hour/h) |
|---|---|
| ≥20% | 4h |
| ≥10%&<20% | 2 |
| ≥5 GB&<10% | 1.5 |
| <5 GB | 1 |

It should be noted that the correspondence shown in Table 1 is merely an example, and certainly, the correspondence may alternatively include first storage space of another size and corresponding first duration. This is not limited in this application. In this way, the management device may quickly determine, based on the foregoing Table 1, whether the first storage space matches the first duration. For example, if the first storage space is 20% GB and the first duration is 5h, according to Table 1, because target duration corresponding to the first storage space of 20% GB is 4h while the first duration is 5h, the first duration is longer than the target duration, and the first storage space therefore matches the first duration.

In this way, the management device may send the first instruction to the flash memory controller when the first storage space matches the first duration. In other words, in the first storage space, when the time since the last fragment reorganization by the flash memory controller is greater than the target duration, the management device sends the first instruction to the flash memory controller, thereby preventing the service life of the flash memory device being affected by frequent fragment reorganization performed by the flash memory controller.

It should be noted that in this embodiment of this application, the management device may send the first instruction to the flash memory controller when the mobile phone is in the screen-off state, the battery level information of the mobile phone satisfies the preset condition, and the first storage space matches the first duration. Alternatively, the management device may send the first instruction to the flash memory controller when the first storage space matches the first duration. This is not limited in this application.

S502: The flash memory controller scans, in response to the first instruction, data stored in the flash memory device to obtain the fragmentation status of the flash memory device.

In some embodiments, the fragmentation status of the flash memory device includes a first state and a second state. The first state may indicate that physical addresses corresponding to fragmented files stored on the storage medium are not consecutive. The second state may indicate that physical addresses corresponding to fragmented files stored on the storage medium are consecutive. In other words, in this embodiment of this application, when the fragmentation status of the flash memory device is in the first state, it indicates that there is a need for fragment reorganization in the flash memory device. When the fragmentation status of the flash memory device is in the second state, it indicates that there is no need for fragment reorganization in the flash memory device.

The fragmentation status returned by the flash memory controller to the processor 101 may be represented by a character field. For example, the fragmentation status returned by the flash memory controller to the processor 101 may be "0" or " 1". "0" may indicate that the fragmentation status of the flash memory device 20 is in the first state, and "1" may indicate that the fragmentation status of the flash memory device is in the second state.

For example, as shown in FIG. 6, the management device may obtain the fragmentation status from the flash memory device by running the first UFS driver and calling the preset interface (such as getDeFregStatus).

S503: The flash memory controller sends a first message to the management device.

The first message indicates the fragmentation status of the flash memory device, for example, indicates that the fragmentation status of the flash memory device is the first state or the second state.

Correspondingly, the management device receives the first message from the flash memory controller.

For example, the first message may be, for example, Fragmentation Status.

In some embodiments, the fragmentation status returned by the flash memory controller to the management device may be represented by a character field. For example, the flash memory controller may return "0" or "1" to the management device. "0" may indicate that the fragmentation status of the flash memory device is in the first state, and "1" may indicate that the fragmentation status of the flash memory device is in the second state. In other words, the first message sent by the flash memory controller to the management device carries the character field "0" or "1" for indicating the fragmentation status of the flash memory device. In other words, the first message includes the character field "0" or "1".

In some embodiments, based on S502, after the flash memory controller obtains the fragmentation status of the flash memory device, the flash memory controller returns the fragmentation status of the flash memory device to the management device. If the fragmentation status of the flash memory device returned by the flash memory controller to the management device is the first state, that is, the first message sent by the flash memory controller to the management device includes the character field "0", then the management device may determine, based on the first message, that the physical addresses corresponding to the fragmented files stored in the storage medium are not consecutive. In this case, the management device may instruct, in response to the first message, the flash memory controller to reorganize the fragmented files on the storage medium. Correspondingly, if the fragmentation status of the flash memory device returned by the flash memory controller to the management device is the second state, that is, the first message sent by the flash memory controller to the management device includes the character field "1", then the management device may determine, based on the first message, that the physical addresses corresponding to the fragmented files stored in the storage medium are consecutive. In this case, in response to the first message, the management device does not need to instruct the flash memory controller to reorganize the fragmented files on the storage medium.

S504: The management device sends a second instruction to the flash memory controller in response to the first message.

The second instruction is for instructing the flash memory controller to reorganize the storage space of the storage medium.

Correspondingly, the flash memory controller receives the second instruction from the management device.

For example, the second instruction may be: a host starts device fragment reorganization (Host start defrag).

S505: The flash memory controller reorganizes the storage space of the storage medium in response to the second instruction.

For example, after the flash memory controller reorganizes the storage space of the storage medium, that is, after the flash memory controller performs fragment reorganization, the physical addresses corresponding to a plurality of fragmented files stored in the storage medium are consecutive.

In conclusion, in this embodiment of this application, the management device may actively send the first instruction to the flash memory controller, to query the fragmentation status of the flash memory device. When the fragmentation status of the flash memory device is the first state, it indicates that the physical addresses corresponding to the plurality of fragmented files stored in the storage medium are not consecutive. Then, the management device sends the second instruction to the flash memory controller. Because the second instruction is for instructing the flash memory controller to reorganize the storage space of the storage medium, the flash memory controller may reorganize the storage space of the storage medium after receiving the second instruction of the management device, so that fragment reorganization for the flash memory device can be performed in a timely manner, and read and write performance of the flash memory device can be restored in a timely manner.

In some embodiments, as shown in FIG. 8, it has proven through repeated experiments that according to the technical solutions provided in embodiments of this application, the fragment reorganization on the flash memory device can be performed in a timely manner, and the read and write performance of the flash memory device can be restored in a timely manner, to cause the read and write performance of the flash memory device to be improved by more than 30%.

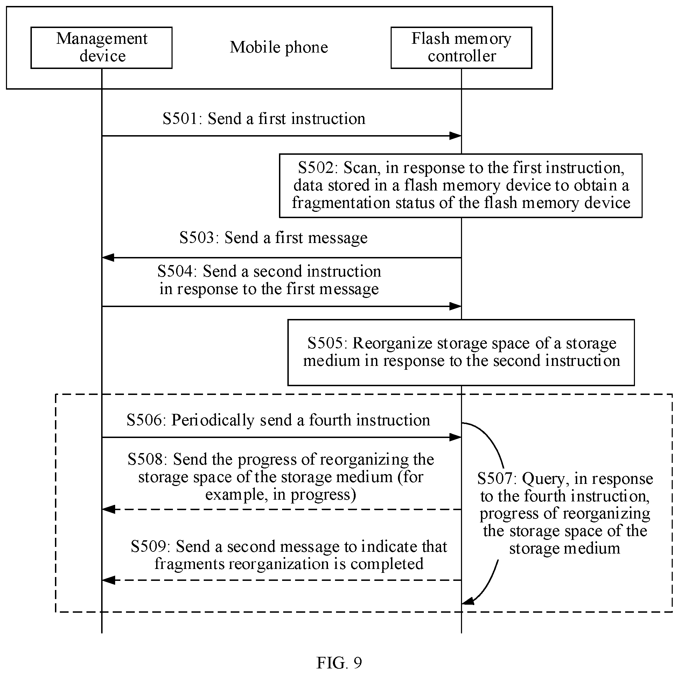

In some embodiments, after the management device sends the second instruction to the flash memory controller, that is, after the management device instructs the flash memory controller to reorganize the storage space of the storage medium, the management device may periodically query progress of the flash memory controller in reorganizing the storage space of the storage medium. For example, as shown in FIG. 9, after the management device sends the second instruction to the flash memory controller, the method further includes the following steps.

S506: The management device periodically sends a fourth instruction to the flash memory controller.

The fourth instruction is for querying the progress of the flash memory controller in reorganizing the storage space of the storage medium.

For example, the fourth instruction may be, for example, Check defrag progress.

S507: The flash memory controller queries, in response to the fourth instruction, the progress of the flash memory controller in reorganizing the storage space of the storage medium.

S508: The flash memory controller sends to the management device the progress of reorganizing the storage space of the storage medium.

Correspondingly, the management device receives the progress of reorganizing the storage space of the storage medium sent from the flash memory controller.

In some embodiments, the progress of reorganizing the storage space of the storage medium sent by the flash memory controller to the management device may be, for example, in progress (in progress) or completed (completed).

For example, if the progress of reorganizing the storage space of the storage medium sent by the flash memory controller to the management device is in progress, the management device resends the fourth instruction to the flash memory controller, that is, re-preforms step S506 to step S508.

It should be noted that when the flash memory controller determines that the physical addresses corresponding to the plurality of fragmented files stored in the storage medium are not consecutive, it indicates that the reorganization of the storage space of the storage medium by the flash memory controller is not yet completed. Therefore, the progress of the flash memory controller in reorganizing the storage space of the storage medium sent by the flash memory controller to the management device is in progress.

In some embodiments, when the flash memory controller detects that the progress of reorganizing the storage space of the storage medium by the flash memory controller is completed, the flash memory controller continues to perform the following steps (for example, perform S509).

S509: The flash memory controller sends a second message to the management device.

The second message indicates that second physical addresses corresponding to the plurality of fragmented files stored in Z storage blocks are consecutive. In other words, the second message indicates that the progress of reorganizing the storage space of the storage medium is completed. For example, the second message sent by the flash memory controller to the management device may be completed.

Correspondingly, the management device receives the second message from the flash memory controller.

As shown in FIG. 9, in this embodiment of this application, after the management device sends the second instruction to the flash memory controller, that is, after the management device instructs the flash memory controller to reorganize the storage space of the storage medium, the management device can set a loop operation, so that the management device can periodically query the progress of the flash memory controller in reorganizing the storage space of the storage medium. In other words, during the loop operation, the management device may periodically send the fourth instruction to the flash memory controller to query the progress of the flash memory controller in reorganizing the storage space of the storage medium. If the progress of reorganizing the storage space of the storage medium returned by the flash memory controller to the management device is in progress, the management device continues to send the fourth instruction to the flash memory controller until the progress of reorganizing the storage space of the storage medium returned by the flash memory controller to the management device is completed, it indicates that the flash memory controller has completed fragments reorganization. In this case, the management device can end the loop operation.

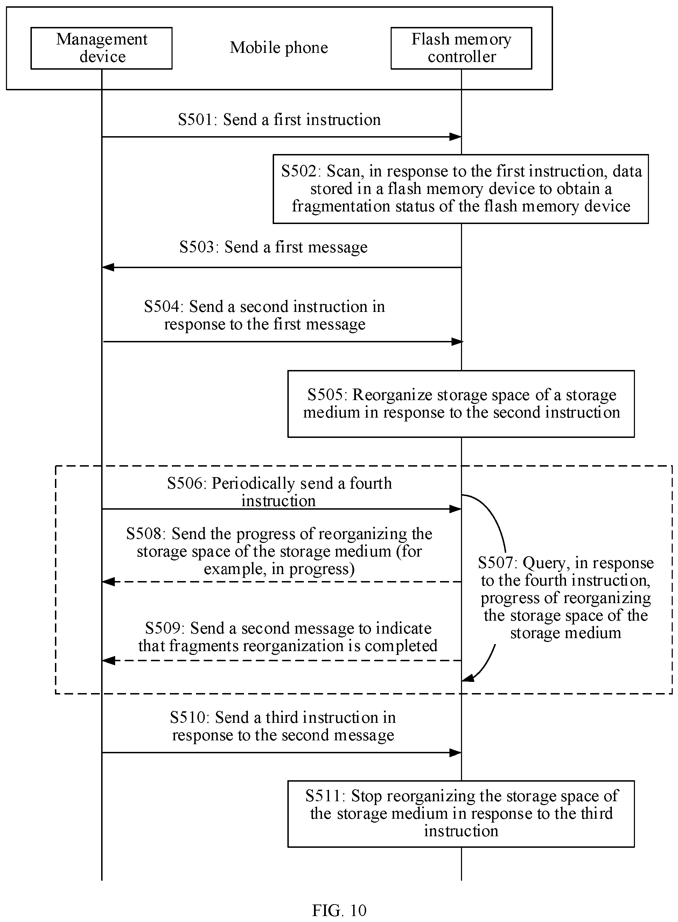

Further, as shown in FIG. 10, after the flash memory controller completes the reorganization of the storage space of the storage medium, that is, when the progress of reorganizing the storage space of the storage medium returned by the flash memory controller to the management device is completed, the method further includes the following steps.

S510: The management device sends a third instruction to the flash memory controller in response to the second message.

The third instruction is for instructing the flash memory controller to stop reorganizing the storage space of the storage medium.

Correspondingly, the flash memory controller receives the third instruction from the management device.

For example, the third instruction may be, for example, Stop defrag.

S511: The flash memory controller stops reorganizing the storage space of the storage medium in response to the third instruction.

In some embodiments, after the management device sends the second instruction to the flash memory controller, the mobile phone may be triggered to start timing of a timer. When the timer times out, if the flash memory controller does not send the second message to the management device, the management device actively sends the third instruction to the flash memory controller to instruct the flash memory controller to stop reorganizing the storage space of the storage medium.

For example, duration of the timer may be set based on specific needs (for example, set to first preset duration). Therefore, in this embodiment of this application, the management device actively sends the third instruction to the flash memory controller if the management device does not receive the second message from the flash memory controller within the first preset duration.

In this way, a problem that the service life of the flash memory device is affected by an increase of a function of the flash memory device because the flash memory controller takes too long to reorganize the storage space of the storage medium.

It should be noted that the content described in embodiments of this application can explain and illustrate the technical solutions in other embodiments of this application, and the technical features described in embodiments can also be applied in other embodiments and combined with the technical features in other embodiments to form a new solution. The embodiments listed in this application are merely described as examples, and are not intended to limit this application thereto.

An embodiment of this application provides a management device, used in a terminal having a flash memory device, where the flash memory device includes a flash memory controller and a storage medium, and the storage medium includes M storage blocks. The management device includes a memory and one or more processors. The memory stores computer program code. The computer program code includes computer instructions. When the computer instructions are executed by the processor, the management device is enabled to perform the various functions or steps performed by the management device in the foregoing embodiments.

An embodiment of this application provides a flash memory device, used in a terminal having a management device, where the flash memory device includes a flash memory controller and a storage medium. The storage medium stores computer program code. The computer program code includes computer instructions. When the computer instructions are executed by flash memory controller, the flash memory controller is enabled to perform the various functions or steps performed by the flash memory controller in the foregoing embodiments.

An embodiment of this application provides a terminal, including a management device and a flash memory device. The terminal further includes a display screen, a memory, and one or more processors. The memory stores computer program code. The computer program code includes computer instructions. When the computer instructions are executed by the processor, the terminal is enabled to perform the various functions or steps performed by the mobile phone in the foregoing embodiments. For a structure of the terminal, refer to the structure of the mobile phone shown in FIG. 3.

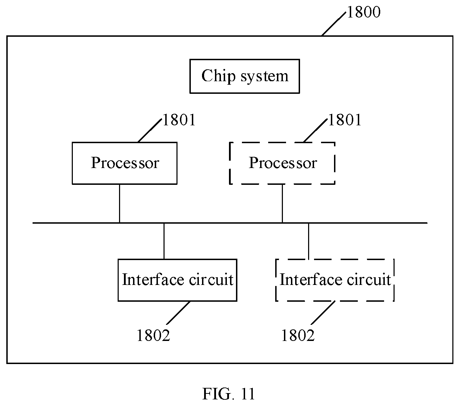

An embodiment of this application further provides a chip system. As shown in FIG. 11, the chip system 1800 includes at least one processor 1801 and at least one interface circuit 1802. The processor 1801 may be the processor 310 shown in FIG. 3 in the foregoing embodiment. The interface circuit 1802 may be, for example, an interface circuit between the processor 310 and an external memory, or an interface circuit between the processor 310 and an internal memory 321.

The processor 1801 may be connected to the interface circuit 1802 through a line. For example, the interface circuit 1802 may be configured to receive a signal from another apparatus (for example, a memory of an electronic device). For another example, the interface circuit 1802 may be configured to send a signal to another apparatus (for example, the processor 1801). For example, the interface circuit 1802 may read instructions stored in the memory and send the instructions to the processor 1801. When the instructions are executed by the processor 1801, the management device is enabled to perform the various steps performed by the management device in the foregoing embodiments, or the flash memory controller is enabled to perform the various steps performed by the flash memory controller in the foregoing embodiments. Certainly, the chip system may further include other discrete devices. This is not specifically limited in embodiments of this application.

According to the descriptions of the foregoing implementations, a person skilled in the art may clearly understand that, for the purpose of convenient and brief description, the division into the foregoing functional modules is only used as an example for description. In actual application, the foregoing functions may be allocated to and completed by different functional modules based on needs. That is, an inner structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the division into modules or units is merely a logical function division and may be another division in actual implementations. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated. Parts displayed as a unit may be one physical unit or a plurality of physical units, located at the one position, or may be distributed to different positions. Some or all of the units may be selected according to actual needs to achieve the objectives of the solutions of embodiments.

In addition, functional units in embodiments of this application may be integrated into one processing unit, or each of the units may be physically separated, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes: any medium that can store program code, such as a USB flash drive, a removable hard disk, a read-only memory (read only memory, ROM), a random access memory (random access memory, RAM), a magnetic disk, or an optical disc.

## Claims

1. A method for reorganizing fragmented files, applied to a terminal having a management device and a flash memory device, wherein the flash memory device comprises a flash memory controller and a storage medium, the storage medium stores fragmented files, and the method comprises:
sending, by the management device, a first instruction to the flash memory controller in response to a specified condition being satisfied, wherein the first instruction is for querying a fragmentation status of the fragmented files stored on the storage medium, wherein the sending, by the management device, a first instruction to the flash memory controller comprises:
obtaining, by the management device, first storage space and first duration, wherein the first storage space indicates available storage space of the storage medium, and the first duration indicates a time interval between a current moment and the last reorganization of the fragmented files on the storage medium by the flash memory controller; and
sending, by the management device, the first instruction to the flash memory controller if the management device determines that the first duration is longer than or equal to target duration corresponding to the first storage space, wherein that the management device determines that the first duration is longer than or equal to target duration corresponding to the first storage space comprises:
querying, by the management device, stored registration information for the target duration, wherein the target duration is a pre-configured time interval between two consecutive reorganizations of the fragmented files on the storage medium; and
determining, by the management device, that the first duration is longer than or equal to the target duration, wherein
a correspondence between the first storage space and the target duration is recorded in
the registration information;
receiving, by the management device, a first message from the flash memory controller, wherein the first message indicates the fragmentation status of the fragmented files stored on the storage medium; and
sending, by the management device, a second instruction to the flash memory controller in response to the first message when the fragmentation status indicates that physical addresses corresponding to the fragmented files stored on the storage medium are not consecutive, wherein the second instruction is for instructing the flash memory controller to reorganize the fragmented files on the storage medium.

2. The method according to claim 1, wherein the sending, by the management device, a first instruction to the flash memory controller comprises:
sending, by the management device, the first instruction to the flash memory controller if the terminal is in a screen-off state and in a charging state, and duration of the terminal being in the screen-off state reaches first preset duration; or
sending, by the management device, the first instruction to the flash memory controller if the terminal is in a screen-off state and in a charging state within a preset time period.

3. The method according to claim 1, wherein the method further comprises:
receiving, by the management device, a second message from the flash memory controller, wherein the second message indicates that the physical addresses corresponding to the fragmented files stored on the storage medium are consecutive; and
sending, by the management device, a third instruction to the flash memory controller in response to the second message, wherein the third instruction is for instructing the flash memory controller to stop reorganizing the fragmented files on the storage medium.

4. The method according to claim 1, wherein the method further comprises:
sending, by the management device, a third instruction to the flash memory controller if the management device does not receive a second message within first preset duration, wherein
the second message indicates that the physical addresses corresponding to the fragmented files stored on the storage medium are consecutive; and the third instruction is for instructing the flash memory controller to stop reorganizing the fragmented files on the storage medium.

5. The method according to claim 3, wherein before the receiving, by the management device, a second message from the flash memory controller, the method further comprises:
sending, by the management device, a fourth instruction to the flash memory controller, wherein the fourth instruction is for querying progress of the flash memory controller in reorganizing the fragmented files on the storage medium;
receiving, by the management device, a third message from the flash memory controller, wherein the third message indicates that the progress of reorganizing the fragmented files on the storage medium is not yet completed; and
resending, by the management device, the fourth instruction to the flash memory controller in response to the third message until the second message from the flash memory controller is received.

6. The method according to any one of claims 1 to 5, wherein the sending, by the management device, a second instruction to the flash memory controller comprises:
calling, by the management device, a storage manager service in an application framework layer to send the second instruction to a storage device driver in a kernel layer; and
the method further comprises:
calling, by the management device, the storage device driver in the kernel layer to drive the flash memory controller to reorganize the fragmented files on the storage medium.

7. The method according to claim 6, wherein the calling, by the management device, a storage manager service in an application framework layer to send the second instruction to a storage device driver in a kernel layer comprises:
calling, by the management device, the storage manager service in the application framework layer to send the second instruction to the storage device driver in the kernel layer through a vold process.

8. The method according to claim 1, wherein the method further comprises:
reorganizing, by the flash memory controller, the fragmented files on the storage medium based on a firmware algorithm inside the flash memory device if the flash memory device satisfies a preset reorganization condition, wherein
the preset reorganization condition comprises: available storage space of the storage medium is less than preset storage space; or the flash memory device satisfies a preset periodicity, and the preset periodicity is a periodicity at which the flash memory controller recognizes the fragmented files on the storage medium, set in the firmware algorithm.

9. A terminal, comprising a management device and a flash memory device, wherein the flash memory device comprises a flash memory controller and a storage medium, the storage medium stores fragmented files, the management device is configured to perform the method according to any one of claims 1 to 7.

## Patentansprüche

1. Verfahren zur Reorganisation fragmentierter Dateien, angewendet auf ein Endgerät mit einer Verwaltungsvorrichtung und einer Flash-Speichervorrichtung, wobei die Flash-Speichervorrichtung einen Flash-Speicher-Controller und ein Speichermedium umfasst, wobei das Speichermedium fragmentierte Dateien speichert und das Verfahren umfasst:
Senden einer ersten Anweisung durch die Verwaltungsvorrichtung an den Flash-Speicher-Controller als Reaktion auf die Erfüllung einer spezifizierten Bedingung, wobei die erste Anweisung zum Abfragen eines Fragmentierungsstatus der auf dem Speichermedium gespeicherten fragmentierten Dateien dient, wobei das Senden der ersten Anweisung durch die Verwaltungsvorrichtung an den Flash-Speicher-Controller umfasst:
Ermitteln eines ersten Speicherplatzes und einer ersten Dauer durch die Verwaltungsvorrichtung, wobei der erste Speicherplatz einen verfügbaren Speicherplatz des Speichermediums angibt und die erste Dauer ein Zeitintervall zwischen einem aktuellen Zeitpunkt und der letzten Reorganisation der fragmentierten Dateien auf dem Speichermedium durch den Flash-Speicher-Controller angibt; und
Senden der ersten Anweisung durch die Verwaltungsvorrichtung an den Flash-Speicher-Controller, falls die Verwaltungsvorrichtung feststellt, dass die erste Dauer länger oder gleich einer Zieldauer ist, die dem ersten Speicherplatz entspricht, wobei das Feststellen durch die Verwaltungsvorrichtung, dass die erste Dauer länger oder gleich der Zieldauer ist, die dem ersten Speicherplatz entspricht, umfasst:
Abfragen der gespeicherten Registrierungsinformationen für die Zieldauer durch die Verwaltungsvorrichtung, wobei die Zieldauer ein vorkonfiguriertes Zeitintervall zwischen zwei aufeinanderfolgenden Reorganisationen der fragmentierten Dateien auf dem Speichermedium ist; und
Bestimmen durch die Verwaltungsvorrichtung, dass die erste Dauer länger oder gleich der Zieldauer ist, wobei
eine Korrespondenz zwischen dem ersten Speicherplatz und der Zieldauer in den Registrierungsinformationen aufgezeichnet ist;
Empfangen einer ersten Nachricht durch die Verwaltungsvorrichtung vom Flash-Speicher-Controller, wobei die erste Nachricht den Fragmentierungsstatus der auf dem Speichermedium gespeicherten fragmentierten Dateien angibt; und
Senden einer zweiten Anweisung durch die Verwaltungsvorrichtung an den Flash-Speicher-Controller als Reaktion auf die erste Nachricht, wenn der Fragmentierungsstatus angibt, dass physische Adressen, die den auf dem Speichermedium gespeicherten fragmentierten Dateien entsprechen, nicht aufeinanderfolgend sind, wobei die zweite Anweisung dazu dient, den Flash-Speicher-Controller anzuweisen, die fragmentierten Dateien auf dem Speichermedium zu reorganisieren.

2. Verfahren nach Anspruch 1, wobei das Senden der ersten Anweisung durch die Verwaltungsvorrichtung an den Flash-Speicher-Controller umfasst:
Senden des ersten Befehls durch die Verwaltungsvorrichtung an den Flash-Speicher-Controller, wenn sich das Endgerät in einem ausgeschalteten Zustand des Bildschirms und in einem Ladezustand befindet und die Dauer, während der sich das Endgerät im ausgeschalteten Zustand des Bildschirms befindet, eine erste voreingestellte Dauer erreicht; oder
Senden des ersten Befehls durch die Verwaltungsvorrichtung an den Flash-Speicher-Controller, wenn sich das Endgerät innerhalb eines voreingestellten Zeitraums in einem ausgeschalteten Zustand des Bildschirms und in einem Ladezustand befindet.

3. Verfahren nach Anspruch 1, wobei das Verfahren ferner umfasst:
Empfangen einer zweiten Nachricht durch die Verwaltungsvorrichtung vom Flash-Speicher-Controller, wobei die zweite Nachricht anzeigt, dass die physikalischen Adressen, die den auf dem Speichermedium gespeicherten fragmentierten Dateien entsprechen, aufeinanderfolgend sind; und
Senden eines dritten Befehls durch die Verwaltungsvorrichtung an den Flash-Speicher-Controller als Reaktion auf die zweite Nachricht, wobei der dritte Befehl dazu dient, den Flash-Speicher-Controller anzuweisen, das Reorganisieren der fragmentierten Dateien auf dem Speichermedium zu stoppen.

4. Verfahren nach Anspruch 1, wobei das Verfahren ferner umfasst:
Senden eines dritten Befehls durch die Verwaltungsvorrichtung an den Flash-Speicher-Controller, wenn die Verwaltungsvorrichtung innerhalb der ersten voreingestellten Dauer keine zweite Nachricht empfängt, wobei
die zweite Nachricht anzeigt, dass die physikalischen Adressen, die den auf dem Speichermedium gespeicherten fragmentierten Dateien entsprechen, aufeinanderfolgend sind; und der dritte Befehl dazu dient, den Flash-Speicher-Controller anzuweisen, das Reorganisieren der fragmentierten Dateien auf dem Speichermedium zu stoppen.

5. Verfahren nach Anspruch 3, wobei vor dem Empfangen einer zweiten Nachricht durch die Verwaltungsvorrichtung vom Flash-Speicher-Controller das Verfahren ferner umfasst:
Senden eines vierten Befehls durch die Verwaltungsvorrichtung an den Flash-Speicher-Controller, wobei der vierte Befehl dazu dient, den Fortschritt des Flash-Speicher-Controllers bei der Reorganisation der fragmentierten Dateien auf dem Speichermedium abzufragen;
Empfangen einer dritten Nachricht durch die Verwaltungsvorrichtung vom Flash-Speicher-Controller, wobei die dritte Nachricht anzeigt, dass der Fortschritt der Reorganisation der fragmentierten Dateien auf dem Speichermedium noch nicht abgeschlossen ist; und
erneutes Senden des vierten Befehls durch die Verwaltungsvorrichtung an den Flash-Speicher-Controller als Reaktion auf die dritte Nachricht, bis die zweite Nachricht vom Flash-Speicher-Controller empfangen wird.

6. Verfahren nach einem der Ansprüche 1 bis 5, wobei das Senden eines zweiten Befehls durch die Verwaltungsvorrichtung an den Flash-Speicher-Controller umfasst:
Aufrufen eines Storage-Manager-Dienstes in einer Anwendungssframework-Schicht durch die Verwaltungsvorrichtung, um die zweite Anweisung an einen Speichervorrichtungstreiber in einer Kernelschicht zu senden; und
wobei das Verfahren ferner umfasst:
Aufrufen des Speichervorrichtungstreibers in der Kernelschicht durch die Verwaltungsvorrichtung, um den Flash-Speicher-Controller anzusteuern, die fragmentierten Dateien auf dem Speichermedium neu zu organisieren.

7. Verfahren nach Anspruch 6, wobei das Aufrufen eines Storage-Manager-Dienstes in einer Anwendungssframework-Schicht durch die Verwaltungsvorrichtung, um die zweite Anweisung an einen Speichervorrichtungstreiber in einer Kernelschicht zu senden, umfasst:
Aufrufen des Storage-Manager-Dienstes in der Anwendungssframework-Schicht durch die Verwaltungsvorrichtung, um die zweite Anweisung über einen vold-Prozess an den Speichervorrichtungstreiber in der Kernelschicht zu senden.

8. Verfahren nach Anspruch 1, wobei das Verfahren ferner umfasst:
Neuorganisieren der fragmentierten Dateien auf dem Speichermedium durch den Flash-Speicher-Controller basierend auf einem Firmware-Algorithmus innerhalb der Flash-Speichervorrichtung, wenn die Flash-Speichervorrichtung eine voreingestellte Reorganisationsbedingung erfüllt, wobei
die voreingestellte Reorganisationsbedingung umfasst: der verfügbare Speicherplatz des Speichermediums ist geringer als ein voreingestellter Speicherplatz; oder die Flash-Speichervorrichtung erfüllt eine voreingestellte Periodizität, und die voreingestellte Periodizität ist eine Periodizität, mit welcher der Flash-Speicher-Controller die fragmentierten Dateien auf dem Speichermedium erkennt, wie im Firmware-Algorithmus festgelegt.

9. Endgerät, umfassend eine Verwaltungsvorrichtung und eine Flash-Speichervorrichtung, wobei die Flash-Speichervorrichtung einen Flash-Speicher-Controller und ein Speichermedium umfasst, wobei das Speichermedium fragmentierte Dateien speichert und die Verwaltungsvorrichtung dazu konfiguriert ist, das Verfahren nach einem der Ansprüche 1 bis 7 durchzuführen.

## Revendications

1. Procédé de réorganisation de fichiers fragmentés, appliqué à un terminal doté d'un dispositif de gestion et d'un dispositif de mémoire flash, dans lequel le dispositif de mémoire flash comprend un contrôleur de mémoire flash et un support de stockage, le support de stockage stockant des fichiers fragmentés, et le procédé comprend :
l'envoi, par le dispositif de gestion, d'une première instruction au contrôleur de mémoire flash en réponse à la satisfaction d'une condition spécifiée, dans lequel la première instruction sert à interroger un état de fragmentation des fichiers fragmentés stockés sur le support de stockage, dans lequel l'envoi, par le dispositif de gestion, d'une première instruction au contrôleur de mémoire flash comprend :
l'obtention, par le dispositif de gestion, d'un premier espace de stockage et d'une première durée, dans lequel le premier espace de stockage indique l'espace de stockage disponible du support de stockage, et la première durée indique un intervalle de temps entre un moment actuel et la dernière réorganisation des fichiers fragmentés sur le support de stockage par le contrôleur de mémoire flash ; et
l'envoi, par le dispositif de gestion, de la première instruction au contrôleur de mémoire flash si le dispositif de gestion détermine que la première durée est supérieure ou égale à une durée cible correspondant au premier espace de stockage, dans lequel le fait que le dispositif de gestion détermine que la première durée est supérieure ou égale à la durée cible correspondant au premier espace de stockage comprend :
l'interrogation, par le dispositif de gestion, d'informations d'enregistrement stockées pour la durée cible, dans lequel la durée cible est un intervalle de temps préconfiguré entre deux réorganisations consécutives des fichiers fragmentés sur le support de stockage ; et
la détermination, par le dispositif de gestion, que la première durée est supérieure ou égale à la durée cible, dans lequel
une correspondance entre le premier espace de stockage et la durée cible est enregistrée dans les informations d'enregistrement ;
la réception, par le dispositif de gestion, d'un premier message provenant du contrôleur de mémoire flash, dans lequel le premier message indique l'état de fragmentation des fichiers fragmentés stockés sur le support de stockage ; et
l'envoi, par le dispositif de gestion, d'une seconde instruction au contrôleur de mémoire flash en réponse au premier message lorsque l'état de fragmentation indique que les adresses physiques correspondant aux fichiers fragmentés stockés sur le support de stockage ne sont pas consécutives, dans lequel la seconde instruction sert à ordonner au contrôleur de mémoire flash de réorganiser les fichiers fragmentés sur le support de stockage.

2. Procédé selon la revendication 1, dans lequel l'envoi, par le dispositif de gestion, d'une première instruction au contrôleur de mémoire flash comprend :
envoi, par le dispositif de gestion, de la première instruction au contrôleur de mémoire flash si le terminal est dans un état d'écran éteint et dans un état de charge, et que la durée pendant laquelle le terminal est dans l'état d'écran éteint atteint une première durée prédéfinie ; ou
envoi, par le dispositif de gestion, de la première instruction au contrôleur de mémoire flash si le terminal est dans un état d'écran éteint et dans un état de charge au cours d'une période de temps prédéfinie.

3. Procédé selon la revendication 1, dans lequel le procédé comprend en outre :
réception, par le dispositif de gestion, d'un deuxième message provenant du contrôleur de mémoire flash, dans lequel le deuxième message indique que les adresses physiques correspondant aux fichiers fragmentés stockés sur le support de stockage sont consécutives ; et
envoi, par le dispositif de gestion, d'une troisième instruction au contrôleur de mémoire flash en réponse au deuxième message, dans lequel la troisième instruction sert à ordonner au contrôleur de mémoire flash d'arrêter la réorganisation des fichiers fragmentés sur le support de stockage.

4. Procédé selon la revendication 1, dans lequel le procédé comprend en outre :
envoi, par le dispositif de gestion, d'une troisième instruction au contrôleur de mémoire flash si le dispositif de gestion ne reçoit pas de deuxième message dans une première durée prédéfinie, dans lequel
le deuxième message indique que les adresses physiques correspondant aux fichiers fragmentés stockés sur le support de stockage sont consécutives ; et la troisième instruction sert à ordonner au contrôleur de mémoire flash d'arrêter la réorganisation des fichiers fragmentés sur le support de stockage.

5. Procédé selon la revendication 3, dans lequel avant la réception, par le dispositif de gestion, d'un deuxième message provenant du contrôleur de mémoire flash, le procédé comprend en outre :
envoi, par le dispositif de gestion, d'une quatrième instruction au contrôleur de mémoire flash, dans lequel la quatrième instruction sert à interroger la progression du contrôleur de mémoire flash dans la réorganisation des fichiers fragmentés sur le support de stockage ;
réception, par le dispositif de gestion, d'un troisième message provenant du contrôleur de mémoire flash, dans lequel le troisième message indique que la progression de la réorganisation des fichiers fragmentés sur le support de stockage n'est pas encore terminée ; et
renvoi, par le dispositif de gestion, de la quatrième instruction au contrôleur de mémoire flash en réponse au troisième message jusqu'à ce que le deuxième message provenant du contrôleur de mémoire flash soit reçu.

6. Procédé selon l'une quelconque des revendications 1 à 5, dans lequel l'envoi, par le dispositif de gestion, d'une deuxième instruction au contrôleur de mémoire flash comprend :
appeler, par le dispositif de gestion, un service de gestionnaire de stockage dans une couche de cadre d'application pour envoyer la seconde instruction à un pilote de dispositif de stockage dans une couche noyau ; et
le procédé comprend en outre :
appeler, par le dispositif de gestion, le pilote de dispositif de stockage dans la couche noyau pour commander au contrôleur de mémoire flash de réorganiser les fichiers fragmentés sur le support de stockage.

7. Procédé selon la revendication 6, dans lequel l'appel, par le dispositif de gestion, d'un service de gestionnaire de stockage dans une couche de cadre d'application pour envoyer la seconde instruction à un pilote de dispositif de stockage dans une couche noyau comprend :
l'appel, par le dispositif de gestion, du service de gestionnaire de stockage dans la couche de cadre d'application pour envoyer la seconde instruction au pilote de dispositif de stockage dans la couche noyau via un processus vold.

8. Procédé selon la revendication 1, dans lequel le procédé comprend en outre :
la réorganisation, par le contrôleur de mémoire flash, des fichiers fragmentés sur le support de stockage sur la base d'un algorithme de micrologiciel à l'intérieur du dispositif de mémoire flash si le dispositif de mémoire flash satisfait à une condition de réorganisation prédéfinie, dans lequel
la condition de réorganisation prédéfinie comprend : l'espace de stockage disponible du support de stockage est inférieur à un espace de stockage prédéfini ; ou le dispositif de mémoire flash satisfait à une périodicité prédéfinie, et la périodicité prédéfinie est une périodicité à laquelle le contrôleur de mémoire flash reconnaît les fichiers fragmentés sur le support de stockage, définie dans l'algorithme de micrologiciel.

9. Terminal, comprenant un dispositif de gestion et un dispositif de mémoire flash, dans lequel le dispositif de mémoire flash comprend un contrôleur de mémoire flash et un support de stockage, le support de stockage stocke des fichiers fragmentés, le dispositif de gestion est configuré pour exécuter le procédé selon l'une quelconque des revendications 1 à 7.
